# FASCICULE DE BREVET EUROPEEN

(11) **EP 2 580 534 B1**
(45) Date de publication et mention de la délivrance du brevet: **16.12.2015**
(21) Numéro de dépôt: 11725728.7
(22) Date de dépôt: 10.06.2011
(51) Int. Cl.: F24J 2/07, F24J 2/16, F24J 2/24, F24J 2/28, F24J 2/34, F24J 2/46

(54) **ABSORBEUR POUR RECEPTEUR SOLAIRE ET RECEPTEUR SOLAIRE COMPORTANT AU MOINS UN TEL ABSORBEUR**
ABSORBER FÜR EINEN SOLAREMPFÄNGER UND SOLAREMPFÄNGER MIT MINDESTENS EINEM DERARTIGEN ABSORBER
ABSORBER FOR A SOLAR RECEIVER AND SOLAR RECEIVER COMPRISING AT LEAST ONE SUCH ABSORBER

(30) Priorité: 11.06.2010 FR 1054660
(43) Date de publication de la demande: 17.04.2013
(73) Titulaire: Commissariat à l'Énergie Atomique et aux Énergies Alternatives, 75015 Paris (FR); Centre National de la Recherche Scientifique, 75016 Paris (FR)
(72) Inventeur: COUTURIER, Raphaël, F-38360 Sassenage (FR); FERRIERE, Alain, F-66800 Llo (FR); PRA, Franck, F-38450 Le Gua (FR); TOCHON, Patrice, F-38140 Uriage (FR); VIDOTTO, Fabien, F-38600 Fontaine (FR)
(74) Mandataire: Ilgart, Jean-Christophe
(86) Numéro de dépôt international: PCT/EP2011/059719
(87) Numéro de publication internationale: WO 2011/154534

(56) Documents cités:
- EP-A1- 1 947 401
- WO-A2-2010/011689
- DE-A1- 10 248 064
- US-A1- 2008 011 290

## Description

### DOMAINE TECHNIQUE ET ART ANTÉRIEUR

La présente invention se rapporte à un absorbeur pour récepteur solaire, à un récepteur solaire comportant au moins un tel absorbeur et à une centrale solaire à concentration comportant au moins un tel récepteur, plus particulièrement une centrale solaire à tour.

La technologie solaire thermique à concentration consiste à utiliser le rayonnement solaire pour chauffer un fluide caloporteur servant de source chaude dans un cycle thermodynamique. La concentration permet d'atteindre des températures plus ou moins élevées et ainsi de bénéficier de rendements de conversion thermodynamiques plus ou moins importants.

Il existe typiquement quatre familles de systèmes solaires à concentration (Concentrating Solar Power (CSP) en anglais) les collecteurs cylindro-paraboliques à foyer linéaire (les concentrateurs linéaires de Fresnel), les systèmes à tour à récepteur central et les paraboles à foyer mobile.

Une centrale solaire à tour comporte notamment un récepteur solaire recevant le rayonnement solaire transmis pas des miroirs appelés héliostats. Le récepteur solaire est le siège de la conversion du rayonnement solaire en chaleur sensible. Il forme un échangeur thermique dans lequel l'apport de chaleur est effectué exclusivement sous forme de rayonnement absorbé par une paroi puis diffusé par conduction dans la structure interne de l'échangeur. Le fluide de transfert, ou caloporteur, circule dans la structure interne et s'échauffe par échange convectif.

Le récepteur solaire est soumis à des conditions de fonctionnement très sévères. En effet, il est soumis à une température de service élevée, à des gradients thermiques à travers sa structure interne liés au transfert conductif d'un flux de chaleur élevé, et à des variations rapides de température de fortes amplitudes, notamment lors des passages nuageux.

De manière fréquente, une structure de récepteur comporte une pluralité de tubes juxtaposés dans lesquels circule le fluide de transfert, une portion de la surface de ces tubes recevant le rayonnement solaire avec des tubes juxtaposés. Cette technique est particulièrement adaptée dans le cas où le fluide de transfert est un liquide, tel que l'eau liquide, l'huile ou les sels fondus. En revanche, dans le cas de gaz, tels que la vapeur d'eau ou l'air, le coefficient d'échange en paroi chute, l'éclairement d'une face des tubes par le flux solaire élevé entraîne une différence de température importante entre la face éclairée et la face arrière, d'où des déformations pouvant conduire à la rupture de tubes.

Afin de s'affranchir de l'apparition d'un écart de température important entre la face soumise au rayonnement solaire et la face qui ne l'est pas, il a été proposé des récepteurs à absorbeur volumétrique. Un exemple d'un tel récepteur est décrit dans le document *"*The "Porcupine": A Novel High-Flux Absorber For Volumetric Solar Receiver", J. Karni, A. Kribus, R. Rubin, P. Doron, dans J. Solar Energy Engineering, 1998, Vol.120 / 85-95*.* Ce récepteur comporte une forêt d'aiguilles dont les axes sont sensiblement alignés avec le rayonnement lumineux et un fluide de transfert circule à proximité de ces aiguilles échauffées, ce qui provoque son échauffement. Ce type de récepteur offre une grande efficacité de transfert, en revanche il est d'une conception complexe, d'un coût élevé et n'a pas été testés dans des applications industrielles à grande échelle.

US 2008/011290 A1 un absorbeur pour réception solaire de centrale solaire à tour conformément au préambule de la revendication 1.

C'est par conséquent un but de la présente invention d'offrir un absorbeur pour récepteur solaire présentant un faible gradient thermique au sein de sa structure et apte à gérer des variations brusques des conditions d'éclairement par le rayonnement solaire.

### EXPOSÉ DE L'INVENTION

Le but énoncé ci-dessus est atteint par un absorbeur pour récepteur solaire comportant une pluralité de tubes dans lesquels circule un gaz de transfert, une enveloppe rigide et un noyau dans un matériau à bonne conductivité thermique et dans lequel sont intégrés les tubes.

L'enveloppe assure le maintien mécanique des tubes et le noyau assure le transfert thermique par conduction et un stockage de la chaleur, permettant de réduire les effets d'une variation brutale de la température. En effet, lors du passage d'un nuage, du fait de l'inertie thermique du noyau la température au sein de l'absorbeur baisse progressivement et relativement lentement ce qui limite les contraintes appliquées aux tubes. L'inertie thermique du matériau joue également un rôle lors de la disparition du nuage, puisqu'elle évite une augmentation trop brutale de la température. Par ailleurs, du fait de sa bonne conductivité thermique, le matériau restitue de manière homogène la chaleur stockée. En outre, il assure un faible gradient thermique au sein de l'absorbeur.

La variation progressive et lente de la température permet de protéger également les éléments en aval du récepteur, qui sont de fait également soumis à des variations de température. En outre, grâce à l'invention, les systèmes de régulation des modules de conversion thermodynamique des centrales solaires à concentration peuvent être simplifiés, puisque les variations de température du fluide en sortie du l'absorbeur sont lissées.

En d'autres termes, on intègre des tubes de fluide de transfert dans un matériau apte à gérer les variations rapides des conditions d'éclairement.

Cette matrice joue le rôle de dissipateur de flux de chaleur, ainsi que de stockage thermique de courte durée.

Dans un exemple avantageux, il est également possible d'intégrer à l'absorbeur un système de stockage complémentaire pour obtenir un stockage thermique de chaleur plus important, et ainsi ralentir encore la vitesse de chute en température lors de la disparition du flux solaire. Par exemple, il peut consister en une semelle de matière similaire au noyau se situant en face arrière de la face destinée à recevoir le flux solaire. Ladite semelle de matière peut correspondre à plus de 10 %, 20% voire 50% en masse de matériau formant noyau supplémentaire. Etant entendu que ladite semelle n'est pas traversée par les tubes.

La présente invention a alors pour objet un absorbeur pour récepteur solaire de centrale solaire à tour comportant une enveloppe dont au moins une paroi est destinée à être éclairée, un noyau en au moins un matériau à bonne conductivité thermique entouré au moins en partie par l'enveloppe et au moins un tube traversant le noyau et s'étendant sensiblement dans une direction parallèle à la paroi destinée à être éclairée, ledit tube étant destiné à la circulation d'un fluide à échauffer. Conformément à l'invention, le au moins un matériau du noyau présente un coefficient de conductivité thermique supérieur ou égal à 100 W.m⁻¹.K⁻¹ donné à la température ambiante.

Le noyau est en un matériau solide et opaque, à la température ambiante et aux températures de fonctionnement de l'absorbeur.

La chaleur étant transférée au fluide via l'enveloppe puis le noyau puis la paroi du tube permet l'utilisation d'un fluide sous pression, par exemple supérieure à 5 bar à chaud dans les tubes, ce que ne permet pas les dispositifs dans lesquels les tubes sont transparents et le fluide est chauffé directement par le flux lumineux qui impacte les tubes.

L'absorbeur selon l'invention comporte avantageusement une pluralité de tubes s'étendant sensiblement dans une direction parallèle à la paroi destinée à être éclairée. Les tubes sont de préférence répartis en plusieurs couches, chaque couche comportant plusieurs tubes, les couches étant superposés le long d'une direction sensiblement normale à la paroi destinée à être éclairée.

Dans une variante de réalisation, l'absorbeur selon la présente invention comporte une partie supplémentaire en un matériau apte à stocker de la chaleur en contact avec le noyau, ladite partie supplémentaire n'étant pas traversée par des tubes. La partie supplémentaire est par exemple disposée à l'opposé de la paroi destinée à être éclairée par rapport au noyau. La partie supplémentaire peut être d'un seul tenant avec le noyau, ou former un réservoir contenant un matériau à changement de phase ou un métal fondu. Le réservoir peut par exemple être formé par matériau poreux imprégné d'un matériau à changement de phase.

De préférence, l'enveloppe et les tubes sont en un même matériau, et sont par exemple en acier inoxydable ou en matériau réfractaire et le noyau est en cuivre, en alliage de tungstène ou alliage de nickel.

L'absorbeur selon la présente invention peut être réalisé par soudage par diffusion, avantageusement par compression isostatique à chaud.

La présente invention a également pour objet un récepteur solaire de centrale solaire à tour comportant au moins un absorbeur selon la présente invention, un collecteur d'entrée distribuant le fluide dans l'absorbeur et un collecteur de sortie.

Dans un mode particulièrement avantageux, le récepteur comporte une pluralité de d'absorbeurs disposés côte à côte formant un pavage, un jeu suffisant étant prévu entre les absorbeurs adjacents de sorte à éviter un contact entre les absorbeurs en cas de dilatation, chaque absorbeur comportant en outre son propre circuit fluidique dans lequel est destiné à circuler un fluide destiné à être échauffé par le flux solaire, les circuits fluidiques des absorbeurs étant connectés entre eux.

Le réseau fluidique de chaque absorbeur comporte une entrée d'alimentation et une sortie d'évacuation du fluide, lesdites entrées et sorties débouchant de préférence dans une face de l'absorbeur opposée à la face destinée à être éclairée.

La présente invention a également pour objet une centrale solaire à tour comportant une tour, au moins un récepteur la présente invention, monté sur ladite tour, le au moins un tube du récepteur étant connecté en entrée à une alimentation en fluide et en sortie à un système utilisant le fluide échauffé, au moins un héliostat orienté vers le récepteur.

Le fluide échauffé peut être un gaz, par exemple de l'air et le système utilisant le gaz échauffé est une turbine à gaz.

### BRÈVE DESCRIPTION DES DESSINS

La présente invention sera mieux comprise à l'aide de la description qui va suivre et des dessins en annexe sur lesquels :
- la figure 1A est une vue en perspective d'un récepteur selon l'invention selon un premier mode de réalisation,
- la figure 1B est une vue de détail de la figure 1A,
- la figure 2A est une vue en coupe transversale d'un exemple de réalisation d'un absorbeur d'un récepteur solaire selon la présente invention,
- la figure 2B est une vue en coupe transversale d'une variante de la figure 2A,
- la figure 2C est une vue en perspective d'un absorbeur selon la présente invention comportant trois couches de trois tubes,
- la figure 2D est une vue en perspective d'une autre variante de réalisation d'un absorbeur selon la présente invention,
- la figure 3 est une vue en coupe transversale d'un autre exemple de réalisation d'un absorbeur selon la présente invention comportant un zone de stockage thermique supplémentaire,
- les figures 4A et 4B sont des vues en coupe transversale de variantes de réalisation d'un absorbeur selon la présente invention mettant en oeuvre des matériaux à changement de phase,
- la figure 5A est une vue de côté d'un absorbeur selon la présente invention lors de son assemblage par soudage par diffusion,
- la figure 5B est une vue en coupe transversale suivant le plan A-A de l'absorbeur de la figure 5A,
- la figure 5C est une vue en coupe longitudinale suivant le plan B-B de l'absorbeur de la figure 5A,
- la figure 6 est une représentation graphique de l'évolution de la température mesurée à l'intérieur de l'absorbeur de la figure 2C,
- la figure 7 est une représentation graphique de l'évolution de la température modélisée dans un absorbeur du type de celui de la figure 3 et dans un absorbeur du type de celui de la figure 2C,
- la figure 8 est une représentation schématique d'une centrale solaire selon la présente invention,
- la figure 9 est une représentation schématique d'un deuxième mode de réalisation d'un récepteur selon la présente invention auquel la carte de flux solaire est superposée,
- la figure 10 est une représentation schématique d'un autre exemple de réalisation d'un récepteur selon le deuxième mode de réalisation,
- les figures 11A et 11B sont des vues en perspective schématiques de la face avant et de la face arrière respectivement d'une réalisation pratique du récepteur de la figure 10,
- les figures 12, 13 et 14 sont des représentations schématiques de différents modes de connexion entre des absorbeurs d'un récepteur selon le deuxième mode de réalisation,
- la figure 15 est une représentation schématique d'un autre exemple de réalisation d'un récepteur modulaire selon le deuxième mode de réalisation,
- la figure 16 est une représentation graphique de l'évolution de la température en °C du fluide et de la paroi de l'absorbeur destinée à être éclairée dans le cas où le fluide froid alimente les absorbeurs situés dans une zone à fort flux, et les absorbeurs situés dans une zone à faible flux sont alimentés par le fluide sortant des absorbeurs situés dans la zone à fort flux.

### EXPOSÉ DÉTAILLÉ DE MODES DE RÉALISATION PARTICULIERS

L'absorbeur selon la présente invention est particulièrement adaptée au chauffage de gaz, cependant il permet également le chauffage de liquide. Par conséquent, dans la description qui va suivre nous désignerons le gaz ou le liquide par "fluide".

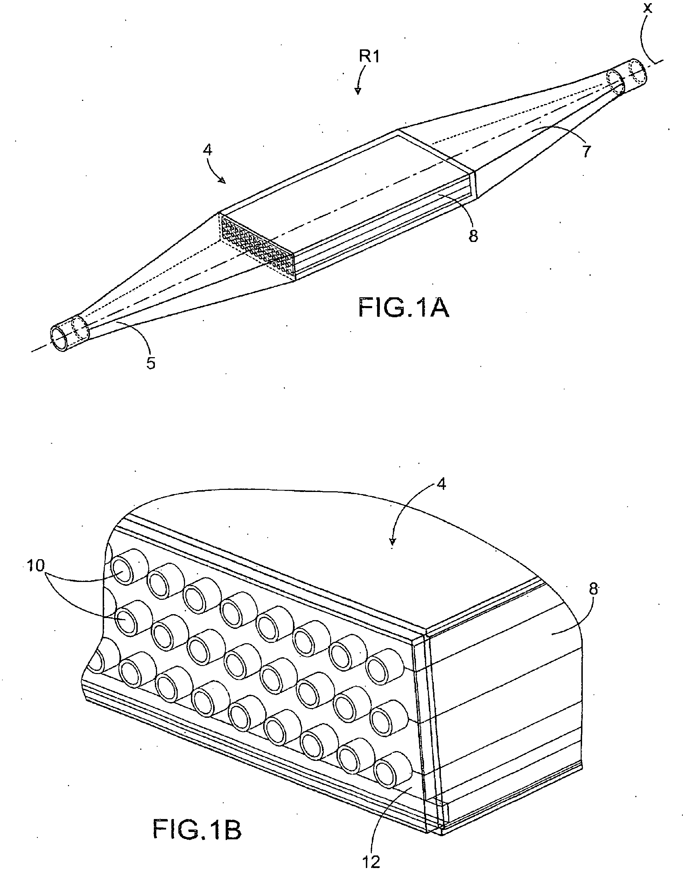

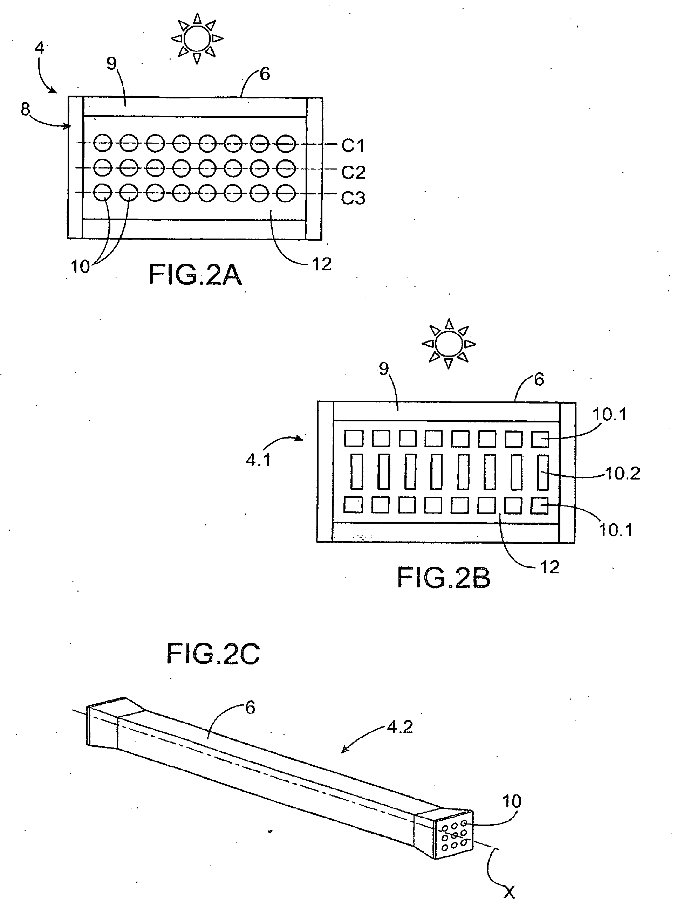

Sur les figures 1A et 1B, on peut voir une représentation schématique d'un récepteur solaire R1 selon la présente invention comportant un absorbeur solaire 4 selon la présente invention dont un exemple est plus particulièrement visible sur la figure 2A.

Le récepteur comporte un collecteur d'entrée 5 qui distribue le fluide dans l'absorbeur 4, et un collecteur de fluide en sortie 7 de l'absorbeur 4. L'absorbeur 4 est le lieu de l'échange thermique entre le flux solaire concentré qui impacte une de ses faces et le fluide circulant à l'intérieur de canaux 10 placés dans un noyau 12 de l'absorbeur 4. Les tubes 10 et le noyau 12 sont enveloppés dans un alliage formant une enveloppe 8 résistant à la haute température de paroi imposée par l'impact du flux solaire. Sur la figure 1B, on peut voir en détail l'entrée de l'absorbeur 4, l'enveloppe 8 étant représentée en transparence.

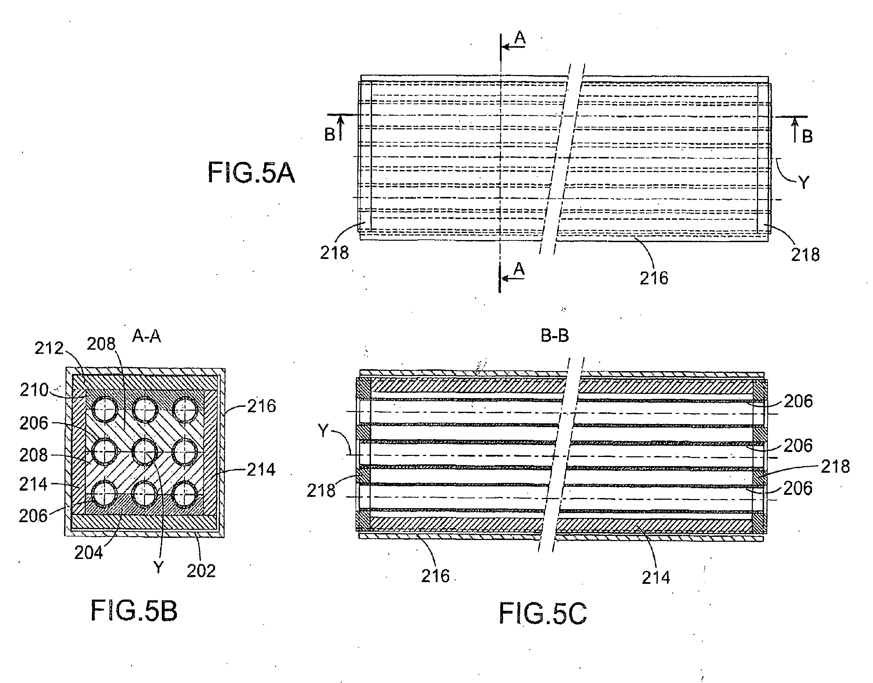

Sur la figure 2A on peut voir une vue en coupe d'un absorbeur 4 selon la présente invention. Dans l'exemple représenté, il a sensiblement une forme parallélépipédique d'axe longitudinal X, cet axe est représenté sur la figure 2C et sur les figures 5A à 5C.

L'absorbeur peut avoir une forme quelconque, cependant il est préférable qu'il comporte au moins une surface sensiblement plane pour recevoir de manière optimale le flux solaire.

L'absorbeur comporte une face 6 destinée à recevoir le rayonnement solaire réfléchi par des héliostats (non représentés), le rayonnement solaire est schématisé par le soleil. Cependant il est à noter que généralement la face 6 n'est pas éclairée directement par le soleil ou pour le moins pas principalement.

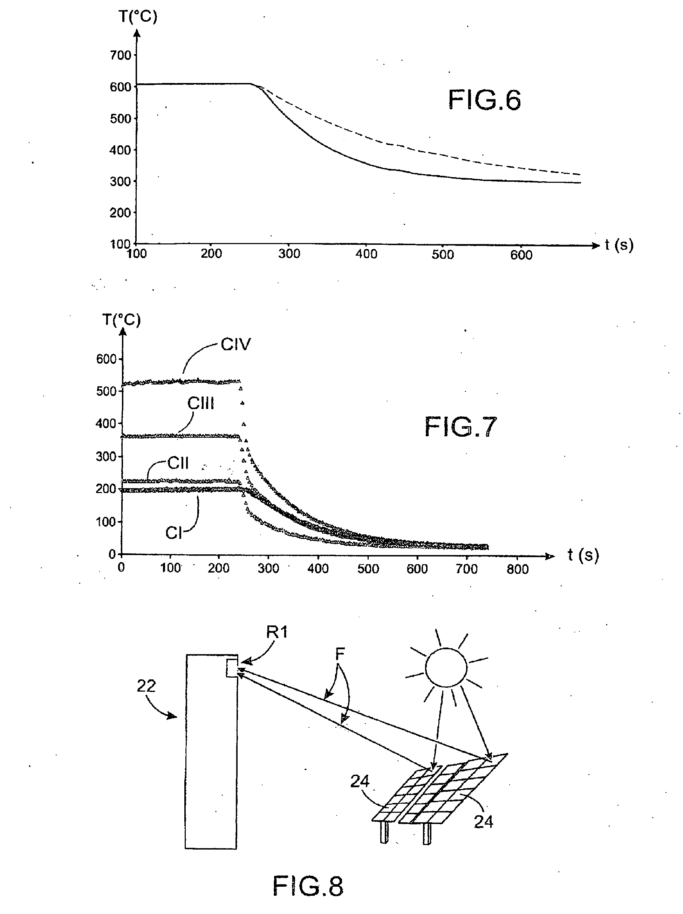

Sur la figure 8, on peut voir une représentation schématique d'une centrale solaire selon l'invention comportant des héliostats 24 orienté vers le récepteur R1 monté au sommet d'une tour 22. Le trajet réel du flux solaire F est renvoyé et concentré par les héliostats 24 vers le récepteur R1.

Comme décrit ci-dessus, l'absorbeur comporte une enveloppe 8 de forme parallélépipédique dont une paroi 9 porte la face destinée à être éclairée 6, des tubes 10 s'étendant le long de l'axe X et un noyau 12 remplissant l'enveloppe 8 et traversé par les tubes 10. Le noyau 12 est réalisé dans un matériau offrant une bonne conductivité thermique.

Le noyau 12 assure une fonction de stockage thermique, la durée de ce stockage variant en fonction de l'inertie du matériau du noyau. De plus, on choisit un matériau à fort coefficient de conduction thermique qui assure une température homogène du noyau. Cette température homogène assure que l'absorbeur subit peu de sollicitations thermomécaniques dans l'épaisseur. Le coefficient de conduction thermique est supérieur ou égal à 100 W.m⁻¹.K⁻¹, cette valeur est donnée pour la température ambiante.

Le noyau est en un matériau solide et opaque, à la température ambiante et aux températures de fonctionnement de l'absorbeur, ce qui assure un contact permanent entre le noyau et les tubes et assure une homogénéité de température autour des tubes.

Le noyau comprend au moins un métal ou un alliage à base de métal, de préférence un métal ou un alliage de métaux à base de cuivre et/ou d'aluminium.

En variante, le noyau peut être réalisé en magnésium, en argent, en or, en zinc, en tungstène.

Les alliages peuvent être le laiton, le bronze, les alliages Al/Si et Al/Cu, le Monel (70Ni-30Cu), les composites à base de cuivre avec dispersoïdes d'alumine (Glidcop).

Les tubes sont, dans l'exemple représenté répartis en plusieurs couches c1, c2, c3 parallèles à la face destinée à être éclairée 6. Les tubes au sein de chaque couche sont disposés les uns à côté des autres sensiblement parallèlement.

Dans l'exemple représenté, les tubes des différentes couches sont alignés en colonne. Alternativement, les couches peuvent être disposées en quinconce.

L'enveloppe 8 est prévue pour assurer un maintien mécanique de l'absorbeur. Elle est alors réalisée en un matériau apte à supporter des températures élevées, en particulier sa paroi supportant la face destinée à être éclairée 6, puisqu'elle est soumise au rayonnement solaire. L'enveloppe résistante à haute température forment une protection pour le noyau dont le les matériaux à forte conductivité pourraient être endommagés au contact de l'air à haute température, par exemple ils pourraient subir une très forte oxydation et un endommagement.

En variante, en pourrait envisager de réaliser l'enveloppe en plusieurs matériaux. Par exemple, un alliage « haute température » pourrait être utilisé pour la face exposée et des alliages moins résistants ailleurs pour les autres faces.

Les tubes 10 sont également destinés à tenir des hautes températures et à l'oxydation puisqu'ils transportent un fluide à haute température. De préférence, on choisit le même matériau pour l'enveloppe et pour les tubes, ce qui simplifie la fabrication.

Pour des températures inférieures à 700°C, l'enveloppe et les tubes peuvent être réalisés en acier inoxydable. Pour des températures supérieures, on peut utiliser des matériaux réfractaires ou des alliages à base nickel. Parmi ces matériaux, on peut citer de manière non limitative l'Inconel 600®, l'Inconel 800®, l'Inconel 617®, Haynes 230®, Haynes 120®.

Dans l'exemple de la figure 2A, les tubes ont des sections circulaires, cependant cette forme n'est en aucun cas limitative. En outre, les tubes ne sont pas nécessairement identiques.

Sur la figure 2B, l'absorbeur 4.1 comporte des tubes de section rectangulaire 10.1 et des tubes de section carrée 10.2. De manière avantageuse, les tubes de section rectangulaire sont disposés de sorte que leur grande dimension soit normale à la face destinée à être éclairée 6, les échanges thermiques sont améliorés car la surface d'échange entre le noyau et les tubes est augmentée et la compacité est augmentée.

Les tubes peuvent être droits, présenter des ondulations ou multi étagés. Dans ce dernier cas, par exemple un tube peut avoir une portion située en partie basse et une portion en partie de l'absorbeur dans la représentation des figures 1A et 1B, et des coudes pour raccorder ces deux portions.

Sur la figure 2C, on peut voir une vue en perspective d'un autre exemple d'absorbeur 4.2 comportant trois couches de trois tubes 10. Dans l'exemple représenté, l'enveloppe 8 comporte des extrémités longitudinales plus épaisses, par exemple ceci est obtenu en usinant la partie centrale de l'enveloppe 8. Cette caractéristique présente les avantages de diposer.de suffisamment de matière pour pouvoir souder les collecteurs au niveau des extrémités, et d'avoir un meilleurs transfert du flux de chaleur dans la partie centrale de l'enveloppe. En effet, l'enveloppe offre une conductivité thermique plus basse que celle du noyau 12 et constitue de ce fait une barrière au transfert thermique. En l'amincissant, cette barrière est réduite.

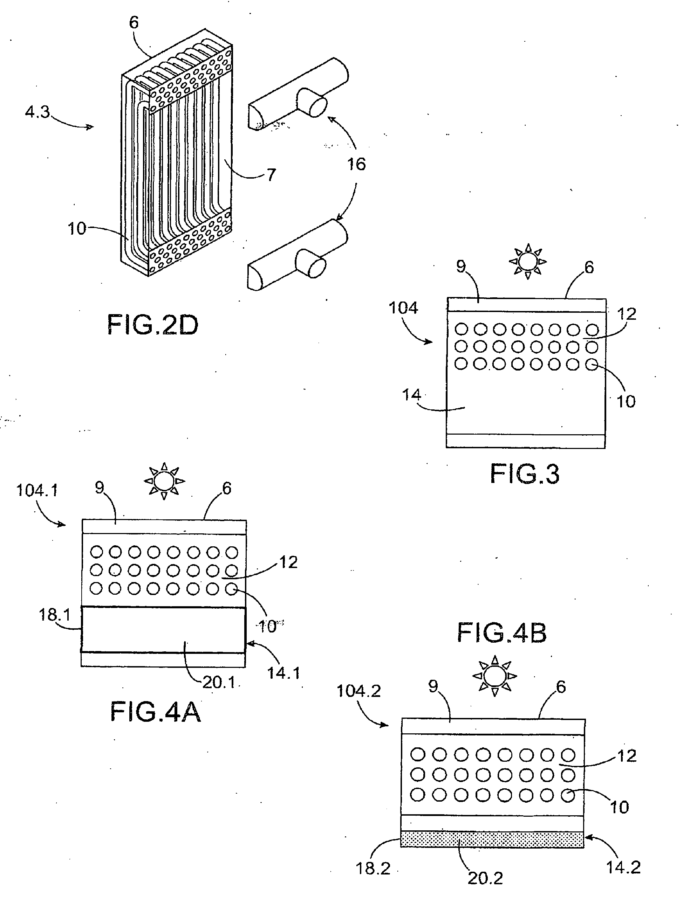

Sur la figure 2D, on peut voir une variante de réalisation 4.3 de l'absorbeur de la figure 2C, dans lequel l'entrée et la sortie de chaque tube 10 débouche dans la face opposée 7 à la face destinée à être éclairée 6, et non dans les faces d'extrémité. Les tubes 10 comportent alors une portion droite et deux coudes au niveau des extrémités longitudinales.

Des collecteurs d'alimentation et d'évacuation 16 sont également représentés, ceux-ci sont destinés à être raccordés aux entrées et sorties des tubes respectivement. Cette variante présente l'avantage d'optimiser la surface soumise au flux solaire et évite que les connexions fluidiques soient soumises directement au flux solaire.

Sur la figure 6, on peut voir une représentation graphique de l'évolution de la température T en °C au sein d'un absorbeur de la 2C et 5B en fonction du temps t en seconde.

La courbe CI représente l'évolution de la température du fluide en sortie de l'absorbeur, pour une température d'entrée de 20°C.

La courbe CII représente l'évolution de la température de la paroi 9 de l'enveloppe portant la face 6 en entrée de l'absorbeur

La courbe CIII représente l'évolution de la température de la paroi 9 au centre de l'absorbeur.

La courbe CIV représente l'évolution de la température de la paroi 9 de l'enveloppe à la sortie de l'absorbeur.

A environ t = 250 s, la face destinée à être éclairée 6 n'est plus éclairée, par exemple du fait du passage d'un nuage. Le passage d'un état éclairé à un état non éclairé est très rapide. Or, grâce l'invention, les températures ne chutent pas brutalement, mais elles diminuent progressivement. En particulier, la température du gaz, grâce à la présence du noyau, diminue de manière très progressive, ce qui permet de réduire les chocs thermiques au sein de l'absorbeur et dans les éléments en aval. On constate qu'il faut environ 300 secondes pour évacuer la chaleur stockée dans l'absorbeur.

L'absorbeur de la figure 2C dans lequel les mesures de température sont représentées sur la figure 6 présente les caractéristiques suivantes:
- celui est de forme parallélépipédique de longueur 800 mm, de largeur 50 mm et de hauteur 50 mm,
- l'enveloppe est en acier inoxydable 316L,
- le noyau est en cuivre pur,
- les tubes sont au nombre de 9 en acier inoxydable 316L, ont un diamètre interne de 8 mm et externe de 10 mm insérés dans le noyau,
- l'ensemble a été soudé par compression isostatique à chaud.

Sur la figure 3, on peut voir un autre exemple de réalisation d'un absorbeur 104 selon la présente invention comportant une masse de matériau supplémentaire 14 non traversée par des tubes.

De préférence, la masse thermique supplémentaire 14 est disposée à l'opposé de la face destinée à être éclairée 6 par rapport au tubes 12, ainsi elle ne s'interpose pas entre le flux solaire et les tubes. On pourrait en variante envisager de disposer cette masse entre les tubes et la face destinée à être éclairée.

Dans l'exemple représenté sur la figure 3, cette masse thermique supplémentaire est d'un seul tenant avec le noyau, le flux thermique est alors continu entre le noyau et la masse thermique supplémentaire 14. On peut prévoir de la rapporter sur le noyau par soudage, préférentiellement par soudage diffusion en compression isostatique à chaud (CIC), par collage ou par des moyens mécaniques.

Cette masse thermique supplémentaire 14 permet de stocker davantage de chaleur, augmentant ainsi l'inertie de l'absorbeur 104. Les dimensions de la masse thermique supplémentaire 14 sont adaptées en fonction de la durée de stockage souhaitée ou du niveau de lissage de la température recherchée. En effet plus la masse 14 est importante, plus la chaleur pouvant être libérée en cas de passage d'un nuage est importante, ce qui permet de ralentir encore la diminution de la température au sein de l'absorbeur. Il est bien entendu que les dimensions de la masse thermique supplémentaire sont également choisies en fonction de l'encombrement maximal souhaité.

Sur la figure 7, on peut voir une modélisation de l'évolution de la température T en °C du fluide en sortie de l'absorbeur 104 en fonction du temps t en s dans le cas d'un absorbeur selon la figure 2C (en trait plein) et d'un absorbeur selon la figure 3 (en tirets). On observe que l'effet de ralentissement de la chute de la température est encore amplifié par la présence de cette masse thermique supplémentaire 14, puisque la température diminue environ deux fois moins vite grâce à la présence de la masse thermique supplémentaire 14.

La température de 300°C vers laquelle tendent les fluides correspond à la température d'entrée du fluide dans l'absorbeur.

La modélisation de la figure 7 a été réalisée en considérant une masse thermique supplémentaire 14 d'une épaisseur de 30 mm, ce qui correspond à un doublement de la masse de cuivre.

Par conséquent, en choisissant les dimensions de la masse thermique supplémentaire 14, il est possible de modifier de manière simple les caractéristiques thermiques de l'absorbeur.

Sur la figure 4A, on peut voir un exemple de réalisation de l'absorbeur 104 selon la présente invention dans laquelle la masse thermique supplémentaire 14.1 est formée par un matériau à changement de phase confiné entre le noyau et l'enveloppe. Le matériau à changement de phase peut être de l'aluminium ou un autre métal fondu, par exemple de l'Ag ou Sn ou un sel fondu (nitrate), dont la température de changement de phase est adaptée à la température de sortie du fluide.

L'absorbeur comporte alors un réservoir 18.1 rapporté sur le noyau à l'opposé de la face destinée à être éclairée 6 rempli d'un matériau à changement de phase 20.1. Ce réservoir est destiné à confiner le matériau à changement de phase 20.1 lorsqu'il passe à l'état liquide.

Dans cet exemple de réalisation, le stockage thermique se fait sous la forme de chaleur sensible et latente.

Sur la figure 4B, on peut voir une variante de réalisation 104.2 de l'absorbeur de la figure 4A, dans lequel la masse thermique supplémentaire 14.2 est formée par une structure poreuse 18.2 imprégnée d'un matériau à changement de phase 20.2. La structure poreuse 18.2 peut être une mousse de nickel ou de graphite.

La masse thermique supplémentaire 14.2 peut alors être directement collée ou brasée sur le noyau. Dans le cas d'un collage, la colle choisie assure une bonne conductivité thermique.

L'absorbeur selon la présente invention procure une protection intrinsèque du récepteur. En effet, l'inertie thermique du noyau évite une variation brutale de température des éléments du récepteur. Grâce, en outre, à une bonne conduction thermique du noyau il y a un faible gradient de thermique dans l'épaisseur et le noyau restitue donc de manière homogène la chaleur stockée. Les tubes sont aussi tous soumis à la même température de paroi. Les tubes ne sont alors plus soumis à de très forts cyclages thermiques, par exemple lors d'un passage nuageux. Par exemple, dans l'absorbeur de la figure 2C, un gradient de température inférieur à 5°C seulement a été mesuré dans l'épaisseur de l'absorbeur pour un flux max de 300kW/m².

L'absorbeur selon la présente invention offre également une protection des composants situés en aval du récepteur dans le sens de circulation du fluide, puisque la température de sortie de gaz du récepteur varie progressivement et plus lentement en cas d'alternance nuageuse. Cette variation progressive ne génère alors pas de transitoires thermiques violents dans les composants situés en aval du récepteur.

Le fait que la température du fluide diminue progressivement et plus lentement est particulièrement intéressant dans le cas où le gaz échauffé alimente une turbine à gaz. En effet, dans les turbines à gaz de l'état de la technique, pour pallier ces alternances nuageuses, il est prévu une chambre de combustion d'appoint afin de maintenir la température du gaz. Grâce à l'invention, il est plus facile de réguler la chambre de combustion car les transitoires de température d'entrée sont lents. En outre, les composants en amont de l'absorbeur ont une durée de vie augmentée car ils sont moins soumis à des variations de conditions de fonctionnement.

Nous allons maintenant décrire des exemples de procédé de fabrication de récepteur selon la présente invention.

Le récepteur et plus particulièrement l'absorbeur selon la présente invention peut être réalisé par perçages de canaux dans le noyau, d'insertion des tubes et puis d'assemblage de l'enveloppe par soudage.

On peut également prévoir d'assembler des pièces élémentaires simples ce qui évite la réalisation de perçages par usinage.

Dans le cas d'assemblage de pièces élémentaires, l'assemblage peut être obtenu par brasage ou soudage par fusion à l'aide de différentes sources d'énergie, telles qu'un arc électrique et les faisceaux de haute énergie.

De manière particulièrement avantageuse, l'absorbeur selon la présente invention peut être réalisé par soudage par diffusion, et de manière encore plus avantage par compression Isostatique à chaud, désigné par la suite CIC.

La technique d'assemblage par soudage par diffusion est bien connue et ne sera rappelée ici que brièvement.

Le soudage par diffusion consiste à appliquer, à haute température et pendant un temps donné, une pression sur les surfaces à assembler. Grâce à cette technique, on obtient une continuité de la matière entre les pièces élémentaires, par élimination des jeux et des porosités sous l'effet combiné de la température et de la force.

Grâce à la réalisation par soudage par diffusion, l'absorbeur ne présente pas de zones de plus faible résistance à la température, puisqu'on évite l'apport de matériaux à bas point de fusion, nécessaires pour l'assemblage par brasage.

L'absorbeur selon la présente invention présente donc des jonctions particulièrement résistantes, puisqu'il ne présente pas de faiblesse au niveau de joints, et les risques de fuite sont évités.

En outre, il est possible de réaliser un absorbeur avec différents matériaux afin de dissocier les fonctions requises et d'optimiser chacune d'entre elles. Comme décrit précédemment, on choisit un matériau résistant à la corrosion à haute température pour réaliser les canaux au contact du fluide, un matériau à forte conductivité thermique pour réaliser le noyau, et une enveloppe au contact du flux solaire apte à supporter des températures élevées. De plus, grâce à l'assemblage par soudage par diffusion, des jonctions sont réalisables entre des alliages métalliques qui ne sont pas soudables par les techniques conventionnelles, par exemple le cuivre et l'acier inoxydable ou un alliage à base nickel ou tungstène et l'acier.

Dans le cas particulièrement intéressant de l'assemblage par CIC, les pièces élémentaires sont par exemple des tôles, des plaques, des coques, des tubes cintrés ou non. En réalisant l'absorbeur selon la présente invention par CIC, on peut obtenir des géométries particulièrement complexes.

En outre, grâce à la CIC, on peut réaliser simplement des absorbeurs de grande taille, ce qui est particulièrement intéressant dans le cas de centrale thermique.

Sur les figures 5A à 5C, on peut voir différentes vues d'une réalisation d'un absorbeur selon la figure 2A avant son assemblage par soudage par diffusion.

Dans l'exemple représenté, le procédé d'assemblage consiste à empiler des plaques et des tubes afin de former l'absorbeur.

Le procédé comporte alors les étapes suivantes :
- mettre en place d'une plaque inférieure 202 en acier inoxydable,
- disposer une plaque 204 en cuivre munie de trois rainures longitudinales formant chacune un berceau pour un tube en acier inoxydable, sur la plaque inférieure 202,
- disposer dans chacune des rainures, un tube en acier inoxydable 206,
- recouvrir les tubes par une plaque en cuivre 208 munie sur sa face inférieure de rainures, de sorte que les tubes soient entourés par du cuivre. La plaque de cuivre est munie sur sa face supérieure de trois rainures formant chacune un berceau pour des tubes en acier inoxydable, pour former un deuxième couche de tuyaux,
- disposer dans chacune des rainures, un tube en acier inoxydable 206,
- recouvrir par une plaque en cuivre 208 munie sur sa face inférieure de rainures, de sorte que les tube soient entourés par du cuivre. La plaque de cuivre est munie sur sa face supérieure de trois rainures formant chacune un berceau pour un tube en acier,
- disposer dans chacune des rainures, un tube en acier inoxydable 206 formant une troisième couche de tuyau,
- recouvrir par une plaque en cuivre 210 munie sur sa face inférieure de rainures, la face supérieur étant plane,
- disposer une plaque en acier inoxydable 212,
- disposer latéralement des plaques 214 d'acier inoxydable sur toute la hauteur et toute la longueur de l'empilement,
- placer l'ensemble ainsi formé dans un boîtier 216 étanche au gaz et dans lequel on fait le vide, et muni de parois longitudinales 218 percées de trous pour le passage des extrémités longitudinales des tubes 206 ; l'extrémité des tubes est soudée de manière étanche au boitier 216.
- disposer ensuite le boîtier dans une atmosphère à haute température, et injecter un gaz sous pression qui rentre dans les tubes et à l'extérieur du boîtier, appliquant une force sur l'empilement. Après compression isostatique à chaud, on enlève par usinage le boîtier 216 et on amincit l'enveloppe 214 dans la partie centrale de l'absorbeur.

Dans l'exemple représenté, l'absorbeur comporte trois couches de trois tubes, mais ceci n'est en aucun cas limitatif. De plus, le choix de matériaux est donné uniquement à titre d'exemple.

En outre, on peut choisir des plaques de cuivres 204, 208 et 210 ayant des nuances différentes.

Il est bien entendu que l'on peut envisager de réaliser un récepteur solaire en assemblant plusieurs absorbeurs tels que décrits précédemment. Les tubes des absorbeurs étant raccordés entre eux. On pourrait également envisager d'empiler des plaques dont certaines seraient perforées et délimiteraient directement les passages des tubes. On pourrait également réaliser le noyau à partir de poudre dans laquelle seraient noyés les tubes.

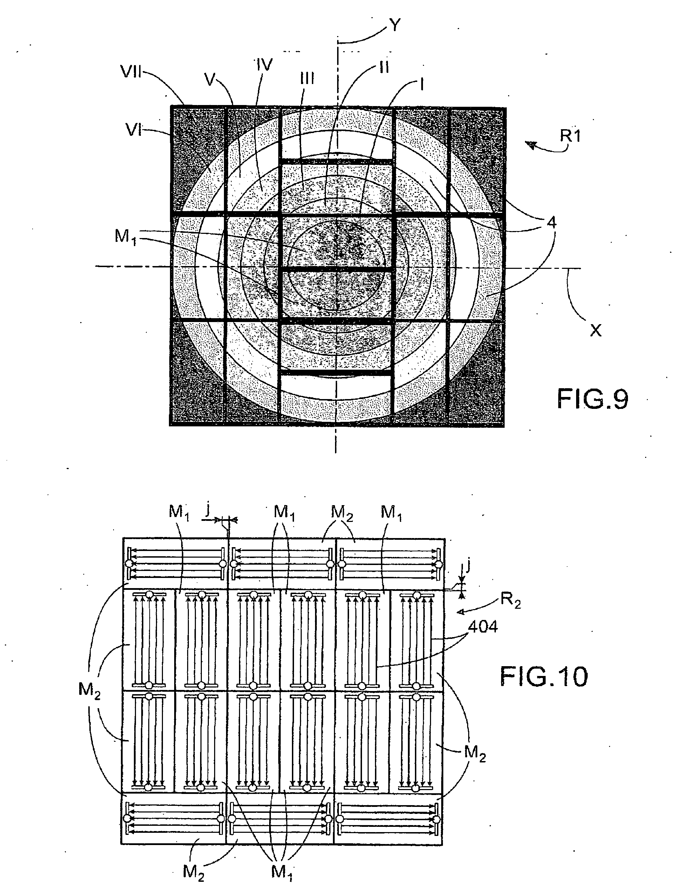

Sur la figure 9, on peut voir un exemple de réalisation d'un récepteur R2 selon un deuxième mode de réalisation particulièrement avantageux comportant une pluralité d'absorbeurs 4 selon la présente invention. Les absorbeurs 4 sont disposés côte à côte de sorte à former un pavage sensiblement continu. Un jeu j est prévu entre les bords de deux absorbeurs adjacents afin de permettre une libre dilatation de chacun des absorbeurs sans risques de contact et de détérioration.

Le jeu j dépend des matériaux constitutifs des absorbeurs, plus particulièrement de leurs coefficients de dilatation. Le jeu j n'est pas nécessairement identique entre tous les absorbeurs, ce peut par exemple être le cas si tous les absorbeurs ne sont pas réalisés dans le même matériau.

Le jeu peut-être compris par exemple entre 1 et 15 mm, par exemple de l'ordre de 7 mm.

Par exemple, dans le cas où les absorbeurs sont réalisés en acier inox où un alliage base nickel, un jeu de l'ordre de 7 mm peut être prévu correspondant à la dilatation. Le jeu entre les absorbeurs est calculable par l'homme du métier avec ses connaissances générales.

Dans l'exemple représenté, le pavage est de forme carrée.

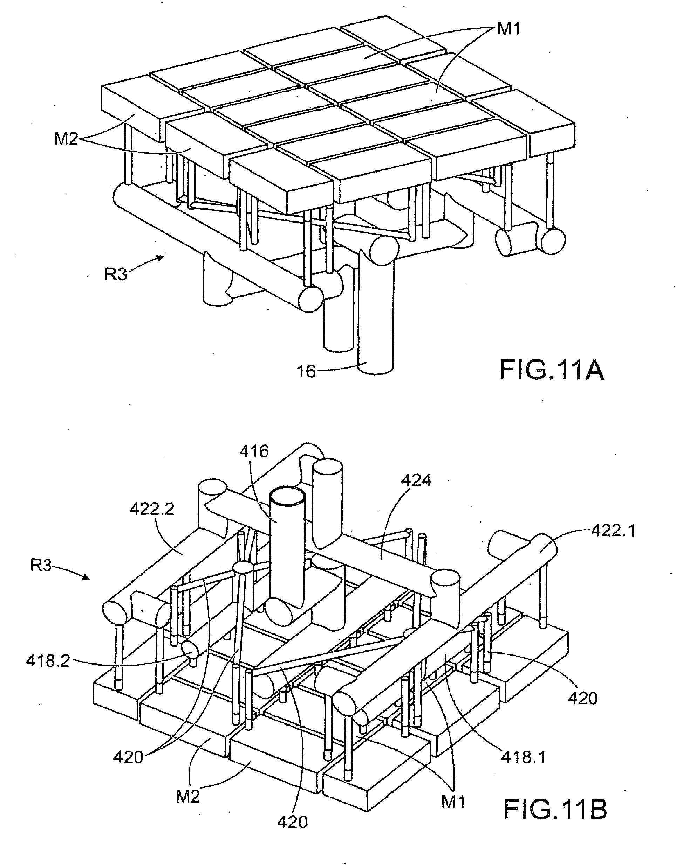

En outre, selon la présente invention, chaque absorbeur comporte son propre circuit fluidique 402 visible sur la figure 11B et schématisé par les flèches 404 sur la figure 10 de l'autre exemple de réalisation, permettant une grande liberté dans la réalisation d'un circuit fluidique.

Dans l'exemple représenté, le récepteur comporte 18 absorbeurs.

Les absorbeurs, dans l'exemple représenté, sont de formes rectangulaires.

Sur la figure 9, est superposée de manière schématique au récepteur la carte du flux solaire concentré caractéristique d'une centrale à tour. Cette carte comporte des zones sensiblement concentriques, la zone la plus foncée est celle recevant le flux solaire maximal, et la zone la plus claire est celle recevant le flux solaire minimal.

La zone recevant le flux maximal est située au centre de la carte et est désignée I, et la zone recevant le flux minimal est la zone située la plus à l'extérieur et est désignée VII, les zones intermédiaires sont désignées II à VI.

Les héliostats de la centrale solaire sont orientés de sorte que la zone I recouvre une zone centrale du récepteur.

Les absorbeurs sont alors de préférence orientés de sorte qu'ils rencontrent le moins grand nombre de zones I à VII afin qu'ils soient soumis à un flux variant peu. Par exemple, les absorbeurs centraux sont situés principalement dans la zone I et de manière moindre dans la zone II. De préférence, l'orientation des absorbeurs est telle qu'au moins la majorité des absorbeurs ne soient pas illuminés par les six zones I à VII.

Ainsi, grâce à la réalisation modulaire selon l'invention, les absorbeurs reçoivent des flux d'intensité proches, et non à la fois le flux maximal et le flux minimal.

En variante les deux absorbeurs centraux M1 pourraient être orientés de sorte que leur longueur s'étendent parallèlement à l'axe Y et offrir un fonctionnement identique à la disposition de la figure 9.

Dans la suite de la description nous distinguerons les zones en deux catégories, les zones à fort flux et les absorbeurs M1 situés dans cette zone et les zones à faible flux et les absorbeurs M2 situés dans cette zone.

Il est bien entendu que plus le nombre d'absorbeurs est important, et de fait plus leur surface est réduite, plus l'inhomogénéité du flux à la surface de chaque absorbeur est réduite. On augmente alors la précision des limites entre les régions définies par les absorbeurs et on peut ainsi se rapprocher de la forme des zones de flux différents.

On peut également prévoir d'avoir des absorbeurs de formes différentes dans un même récepteur afin d'améliorer encore la précision.

Cependant pour des raisons économiques et de réalisations pratiques, puisque chaque absorbeur a sa propre connexion fluidique, on choisit en général de limiter le nombre d'absorbeurs et donc d'avoir une certaine inhomogénéité du flux sur certains ou tous les absorbeurs. En outre, il est généralement plus économique de disposer d'un absorbeur standard au lieu de plusieurs absorbeurs, et ce même si le fonctionnement du récepteur n'est pas optimal.

Par exemple, les absorbeurs sont positionnés sur un cadre support muni de montants transverses de manière à porter la charge de chacun des absorbeurs. Les absorbeurs seront préférentiellement non solidaires du support pour limiter les problèmes de différence de dilatation thermique entre le matériau des absorbeurs et celui du cadre support. Par exemple, les absorbeurs sont posés sur le support, et les tubulures d'alimentation en fluide et d'évacuation du fluide assurent la flexibilité du système.

De préférence, les tubulures sont calorifugées pour réduire les pertes thermiques au niveau des connexions entre les absorbeurs. Le calorifugeage est de type connu de Lhomme du métier.

On peut alors prévoir d'alimenter de manière spécifique chaque absorbeur en fonction du flux solaire qui l'éclaire.

Par exemple, on peut prévoir d'alimenter en fluide froid les absorbeurs situés dans les zones à fort flux et d'alimenter les absorbeurs situés dans les zones à faible flux avec le fluide sortant des zones à fort flux.

Ainsi par exemple, les absorbeurs situés dans les zones à fort flux sont connectés en parallèle à une source de fluide froid, et sont connectés en série avec les absorbeurs situés dans les zones à faible flux.

Sur les figures 10, 11A et 11B, on peut voir un autre exemple de réalisation d'un récepteur modulaire R3 selon la présente invention.

Sur la figure 11A, on peut voir le récepteur du côté de sa face destinée à recevoir le flux solaire, et sur la figure 11B, on peut voir le récepteur du côté des connexions fluidiques entre les absorbeurs du récepteur en face arrière du récepteur.

Comme on le constate sur la figure 9 représentant la carte des flux qui s'applique aussi au récepteur R3, la zone à fort flux se situe au centre et la zone à faible flux se situe à l'extérieur. Le récepteur R3 présente une distribution simplifiée par rapport à celle du récepteur R1 de la figure 9.

Le récepteur R3 comporte au total 18 absorbeurs, huit absorbeurs M1 sont situés au centre dans la zone à fort flux et dix absorbeurs M2 sont situés à l'extérieur entourant les absorbeurs M1 dans la zone à faible flux. On peut alors prévoir que les huit absorbeurs M1 soient connectés en parallèle et connectés en série avec les dix absorbeurs M2. Dans l'exemple représenté, l'alimentation des absorbeurs M1 se fait au centre du récepteur.

La répartition des absorbeurs du récepteur R2 permet de reproduire la distribution du flux solaire sur le récepteur. Cette répartition permet d'améliorer de manière sensible le fonctionnement du récepteur par rapport à celui des récepteurs de l'état de la technique.

Sur la figure 11B, on peut voir un exemple de circuit fluidique de connexion entre les absorbeurs du récepteur R3.

Le circuit fluidique comporte un conduit d'alimentation 416 des absorbeurs M1, ceux-ci étant alimentés en parallèle, deux conduits de collecte 418.1, et 418.2 du fluide échauffé sortant des absorbeurs M1. Chaque conduit de collecte 418.1, 418.2 collecte le fluide échauffé de quatre absorbeurs M1, et le redistribue dans quatre absorbeurs M2 en parallèle par des sous-conduits 420.

Le fluide en sortie des absorbeurs M2 est collecté pas deux conduits 422.1, 422.2, connectés en eux par un conduit principal 424 regroupant tout le fluide échauffé sortant du récepteur. Ce conduit principal 424 est connecté par exemple à une zone de stockage du fluide échauffé en vue de son utilisation.

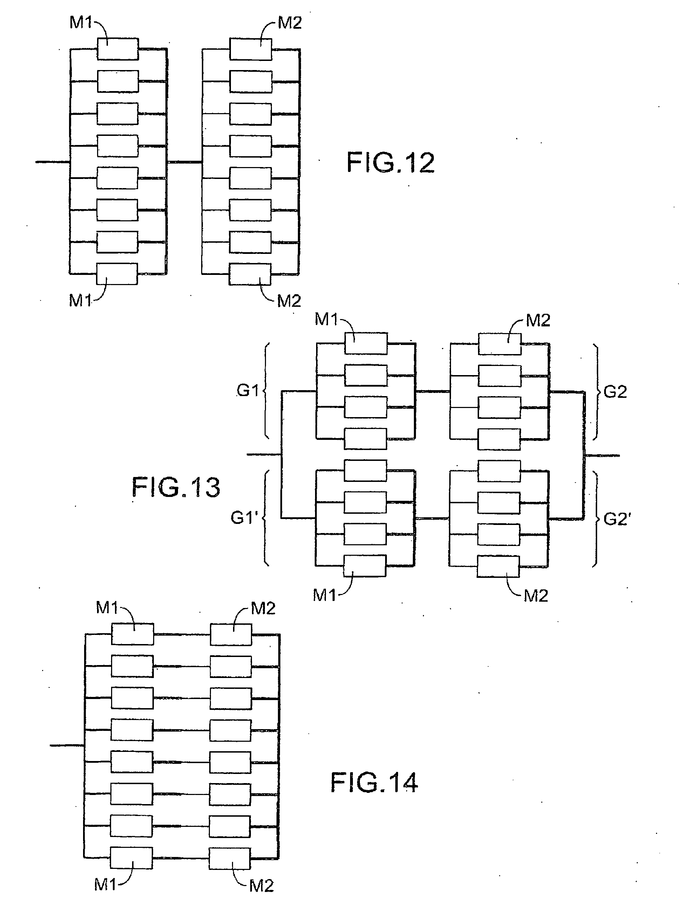

Sur les figures 12, 13 et 14, on peut voir des exemples de connexion entre les absorbeurs M1 situés dans une zone à fort flux et les absorbeurs M2 situés dans la zone à faible flux.

Sur la figure 12, les absorbeurs M1 sont tous alimentés en parallèle. En sortie des absorbeurs M1, le fluide échauffé dans chaque absorbeur M1 est collecté en parallèle et est mélangé afin d'homogénéiser la température du fluide avant d'alimenter de nouveau en parallèle chacun des absorbeurs M2. La collecte du fluide échauffé dans les absorbeurs M2 s'effectue également en parallèle. Ce mode de connexion présente l'avantage d'assurer une homogénéisation de la température du fluide entre chaque zone de flux.

Sur la figure 13, on peut voir un autre exemple de connexion des absorbeurs M1 et M2.

Dans cet exemple, des sous-groupes d'absorbeurs sont créés, en particulier chaque zone de flux comporte huit absorbeurs, deux sous-groupes G1, G1' de quatre absorbeurs M1 sont réalisés dans la zone à fort flux, et deux sous-groupes G2, G2' de quatre absorbeurs M2 sont réalisés dans la zone à faible flux.

Les deux sous-groupes G1, G1' sont alimentés en parallèle, les absorbeurs dans chaque sous-groupe sont alimentés en parallèle.

Chaque sous groupe G1, G1' est connecté en série à un sous-groupe G2, G2', et les absorbeurs M2 de chacun des sous-groupes G2, G2' sont alimentés en parallèles.

Le fluide en sortie des sous groupes G2, G2' est collectée en parallèle, puis les fluides collectés dans chacun des sous groupes sont mélangés.

Sur la figure 14, on peut voir un autre exemple de connexion, dans lequel les absorbeurs M1 sont alimentés en parallèle et chaque absorbeur M1 est connecté en série avec un absorbeur M2, le fluide en sortie des absorbeurs M2 est collecté en parallèle.

Il est bien entendu que le récepteur peut comporter plus de deux zones de flux, et par conséquent, les connexions décrites sur les figures 12 à 14 sont adaptées par exemple à une répartition des absorbeurs en trois, voire plus, zones de flux solaire.

De préférence, l'architecture du circuit fluidique de connexion est telle qu'elle génère un débit du fluide identique ou quasi-identique entre les absorbeurs. La conception du circuit tient alors compte des pertes de charge générées par les absorbeurs et par le diamètre des conduits choisis.

Comme expliqué ci-dessus, les absorbeurs sont disposés côte à côte de sorte à former un pavage sensiblement continu. Un jeu j est prévu entre les bords de deux absorbeurs adjacents afin de permettre une libre dilatation de chacun des absorbeurs, réduisant ainsi les risques de contact entre les absorbeurs et leur détérioration.

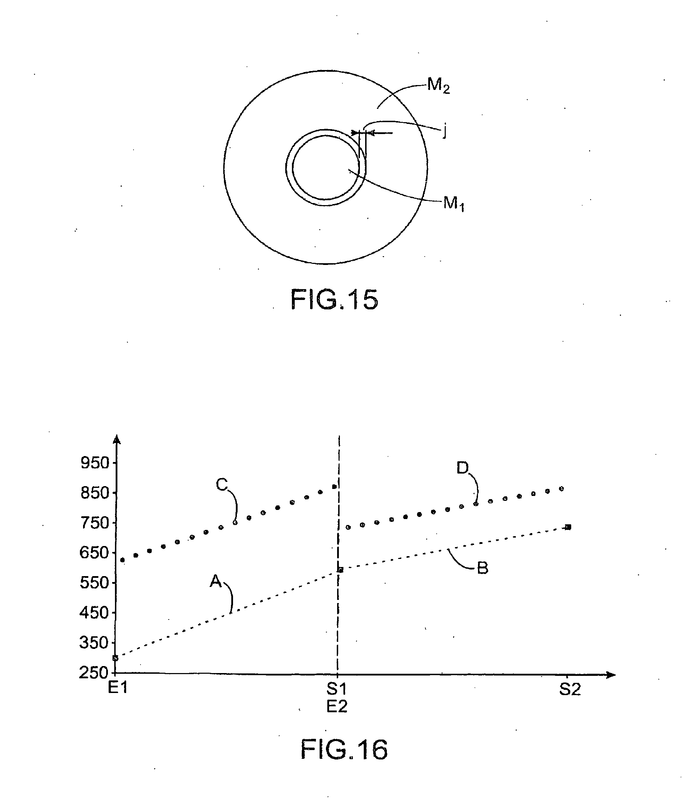

Sur la figure 15, on peut voir un autre exemple de réalisation dans lequel le récepteur R4 a une forme circulaire et comporte deux absorbeurs concentriques, un premier absorbeur central circulaire M1 soumis au fort flux et un absorbeur extérieur annulaire soumis au faible flux M2. Un jeu j est prévu entre le bord du premier absorbeur et le bord intérieur du deuxième absorbeur.

Il est bien entendu qu'un récepteur modulaire présentant toute autre forme et comportant des absorbeurs ayant toute forme, par exemple rectangulaire, en losange, en forme d'ellipse ou de forme quelconque ne sort pas du cadre de la présente invention.

L'absorbeur de la figure 2C est particulièrement adapté à la réalisation d'un récepteur modulaire selon l'invention. En effet, les tubes 10 débouchent dans la face arrière 7 de l'absorbeur et les collecteurs 16 sont également disposés en face arrière.

Les collecteurs 16 ne sont alors pas soumis au flux solaire, les sollicitations thermiques sont donc réduites, ce qui limite de fait les risques d'endommagement de ceux-ci. Ceux-ci peuvent alors être réalisés avec des matériaux ayant une tenue à la température moindre et généralement un prix de revient plus faible. Par ailleurs, dans le cas où les collecteurs seraient connectés par brasage aux tubes, les risques de fuite sont réduits.

En outre, le fait de disposer les sorties des tubes et les collecteurs en face arrière permet d'augmenter la surface utile du récepteur. En effet, comme on peut le voir sur les figures 9 à 12B, la quasi-totalité de la surface du récepteur orientée face au flux solaire sert à transmettre l'énergie du flux solaire au fluide. En effet, toute la surface du récepteur est composée des faces 6 des absorbeurs, hormis les espaces entre les absorbeurs qui forment des zones perdues, cependant leur largeur peut être optimisée de sorte à réduire leurs surfaces.

De manière également avantageuse, on prévoit que la connexion entre les tubes 10 et le circuit fluidique extérieur soit apte à absorber les dilatations différentielles entre les absorbeurs. On peut pour cela mettre en oeuvre des soufflets de dilatation.

De manière encore plus avantageuse, on réalise les tubes d'alimentation ayant directement une forme permettant de s'affranchir des soufflets de dilatation, par exemple ceux-ci forment des lyres de dilatation. Les tubes de collecte peuvent également former des lyres de dilatation, cependant le problème de dilatation est moindre puisqu'ils sont traversés par un fluide échauffée et connaissent eux-mêmes une dilatation.

Grâce à la modularité géométrique du récepteur, il est possible d'adapter l'absorbeur en fonction de flux solaire dans laquelle il est situé. Les absorbeurs situés dans la zone à fort flux sont réalisés en un ou des matériaux résistants aux hautes températures, alors que ceux situés dans la zone à faible flux peuvent être réalisés en matériaux résistants à des températures plus basses. Le coût de fabrication lié aux matériaux des absorbeurs peut alors être généralement réduit.

Grâce à la modularité du récepteur, il est possible de réaliser des circuits fluidiques différents et ainsi d'optimiser la réalisation des absorbeurs en fonction des besoins et des conditions de fonctionnement souhaitées ou imposées.

Dans la suite de la description, nous allons considérer un récepteur formé par des absorbeurs tels que celui représenté sur la figure 16. La paroi considérée est celle portant la face 6 éclairée par le flux.

Si le fluide d'entrée alimente l'absorbeur situé dans la zone à faible flux, la température de la paroi est modérée. Typiquement avec une température d'entrée de fluide de 300°C, la température de la paroi est de l'ordre de 550°C. On peut alors utiliser un acier inoxydable pour la réalisation de l'absorbeur. En revanche, l'absorbeur situé dans la zone à fort flux est alimenté par un fluide déjà préchauffé par l'absorbeur situé dans la zone à faible flux et, du fait de l'exposition au fort flux, la température de la paroi atteint alors environ 1000°C.

On peut alors choisir des matériaux différents d'un absorbeur à l'autre, en fonction de la zone de flux dans laquelle il est situé. En considérant que le matériau moins résistant thermiquement a généralement un prix de revient plus faible qu'un matériau plus résistant à la température, on peut optimiser le coût de fabrication du récepteur.

Sur la figure 16, on peut voir l'évolution de la température T en °C du fluide ou de la paroi de l'absorbeur portant la face 6 dans le cas où le fluide froid alimente les absorbeurs situés dans la zone à fort flux, et les absorbeurs situés dans la zone à faible flux sont alimentés par le fluide sortant des absorbeurs situés dans la zone à fort flux.

E1 désigne l'entrée des absorbeurs dans la zone à fort flux; S1 désigne la sortie des absorbeurs dans la zone à fort flux; E2 désigne l'entrée des absorbeurs dans la zone à faible flux; et S2 désigne la sortie des absorbeurs dans la zone à faible flux.

La température de la paroi de l'absorbeur situé dans la zone à fort flux est représentée par la courbe C.

La température de la paroi de l'absorbeur situé dans la zone à faible flux est représentée par la courbe D.

La température du fluide circulant dans l'absorbeur situé dans la zone à fort flux est représentée par la courbe A.

La température du fluide circulant dans l'absorbeur situé dans la zone à faible flux est représentée par la courbe B.

On constate dans cet exemple d'alimentation fluidique, que les températures des parois des absorbeurs sont quasiment identiques. On peut alors utiliser des absorbeurs ayant les mêmes propriétés de tenue à la température. Dans ce cas particulier, la température maximale des absorbeurs est 900°C, on peut alors utiliser des matériaux à base de nickel.

Il est bien entendu que le récepteur selon la présente invention peut présenter tout type de connexion fluidique, par exemple mais de manière non limitative :
- tous les absorbeurs peuvent être alimentés en parallèle par une source de fluide froid, quel que soit le flux que chaque absorbeur reçoit,
- comme décrit précédemment, on peut prévoir d'alimenter en parallèle les absorbeurs situés dans la zone à fort flux avec le fluide froid, les absorbeurs situés dans la zone à faible flux étant alimentés par le fluide sortant des absorbeurs situés dans la zone à fort flux ; ou
- comme également décrit précédemment, d'alimenter en parallèle les absorbeurs situés dans la zone à faible flux avec le fluide froid, les absorbeurs situés dans la zone à fort flux étant alimentés par le fluide sortant des absorbeurs situés dans la zone à faible flux.

De manière alternative, il peut être avantageux de connecter en série deux ou plusieurs absorbeurs, et de connecter en parallèle les groupes d'absorbeurs connectés en série. Par exemple, dans le cas où le récepteur comporte 16 absorbeurs, on connecte avantageusement des paires d'absorbeurs en série afin de n'avoir plus que 8 connexions en parallèle, ce qui permet de réduire les disparités de débit entre les absorbeurs et donc de diminuer les risques d'apparition de points chauds. En outre, la distribution du fluide est améliorée car les pertes de charges sont augmentées par rapport à 16 connexions en parallèle. Si la mise en série de absorbeurs permet de réduire les risques d'une mauvaise distribution de fluide par rapport à une disposition intégralement en parallèle, il est souhaitable d'assurer un re-mélange du fluide en sortie des absorbeurs M1 de manière à ce que les fluides alimentant les absorbeurs M2 aient des niveaux de température identiques, comme cela est schématisé sur la figure 9.

Grâce à cet exemple de récepteur modulaire selon la présente invention, on peut obtenir un fluide sortant des absorbeurs dont les températures sont proches. Ce qui n'est pas le cas avec les récepteurs de l'état de la technique qui sont formés de tubes disposés les uns à côté des autres s'étendant d'un bord à un bord opposé du récepteur. En effet, chaque tube ne reçoit pas le même flux et celui-ci varie sur la longueur de chaque tube, les températures du fluide sortant de chaque tube peuvent varier de manière considérable, ce qui peut être dommageable pour les éléments en aval du récepteur. Le ré-mélange en sortie des absorbeurs M1 est donc particulièrement intéressant pour éviter les dommages sur les éléments en aval.

En outre, le récepteur modulaire selon la présente invention présente l'avantage d'être de maintenance simplifiée. En effet, si un absorbeur est défaillant, par exemple en cas de fuite, celui-ci peut être remplacé unitairement, sans requérir un remplacement du récepteur complet. De plus, ce remplacement réduit considérablement le temps d'arrêt de la centrale solaire. Outre le coût réduit de la réparation, la durée d'intervention est réduite de manière sensible, d'autant plus qu'il est possible d'avoir quelques absorbeurs en stock contrairement à un récepteur complet.

Le récepteur selon la présente invention offre également l'avantage d'être facilement adapté pour modifier sa puissance. Notamment dans le cas de la réalisation de récepteurs de plus grandes puissances, il suffit d'augmenter le nombre d'étages et le nombre d'absorbeurs par étage.

## Revendications

1. Absorbeur pour récepteur solaire (R1, R2, R3, R4) de centrale solaire à tour comportant une enveloppe (8) dont au moins une paroi (9) est destinée à être éclairée, un noyau (12) entouré au moins en partie par l'enveloppe (8) et au moins un tube (10) traversant le noyau (12) et s'étendant sensiblement dans une direction parallèle à la paroi (9) destinée à être éclairée, ledit tube (10) étant destiné à la circulation d'un fluide à échauffer, **caractérisé en ce que** le noyau est en au moins un matériau présentant un coefficient de conductivité thermique supérieur ou égal à 100 W.m⁻¹.K⁻¹ donné à la température ambiante.

2. Absorbeur selon la revendication 1, comportant une pluralité de tubes (10) s'étendant sensiblement dans une direction parallèle à la paroi (9) destinée à être éclairée.

3. Absorbeur selon la revendication 2, dans lequel les tubes (10) sont répartis en plusieurs couches (c1, c2, c3), chaque couche (c1, c2, c3) comportant plusieurs tubes (10), les couches (c1, c2, c3) étant superposées le long d'une direction sensiblement normale à la paroi (9) destinée à être éclairée.

4. Absorbeur selon l'une des revendications 1 à 3, comportant une partie supplémentaire (14, 14.1, 14.2) en un matériau apte à stocker de la chaleur en contact avec le noyau (12), ladite partie supplémentaire (14, 14.1, 14.2) n'étant pas traversée par des tubes.

5. Absorbeur selon la revendication 4, dans lequel la partie supplémentaire (14, 14.1, 14.2) est disposée à l'opposé de la paroi (9) destinée à être éclairée par rapport au noyau.

6. Absorbeur selon la revendication 4 ou 5, dans lequel la partie supplémentaire (14) est d'un seul tenant avec le noyau (12).

7. Absorbeur selon la revendication 4, dans lequel la partie supplémentaire (14.1, 14.2) est un réservoir (18.1, 18.2) contenant un matériau à changement de phase (20.1, 20.2) ou un métal fondu

8. Absorbeur selon la revendication 7, dans lequel le réservoir est formé par matériau poreux (18.2) imprégné d'un matériau à changement de phase (20.2).

9. Absorbeur selon l'une des revendications 1 à 8, dans lequel l'enveloppe (8) et le au moins un tube (10) sont en un même matériau.

10. Absorbeur selon la revendication 9, dans lequel l'enveloppe (8) et le au moins un tube (10) sont en acier inoxydable ou en matériau réfractaire et le noyau est en cuivre, en alliage de tungstène ou alliage de nickel.

11. Absorbeur selon l'une des revendications 1 à 10, étant réalisé par soudage par diffusion, avantageusement par compression isostatique à chaud.

12. Récepteur solaire de centrale solaire à tour comportant au moins un absorbeur (4, 104, 104.1, 104.2) selon l'une quelconque des revendications 1 à 11, un collecteur d'entrée (5) distribuant le fluide dans l'absorbeur et un collecteur de sortie (7).

13. Récepteur solaire selon la revendication 12, comportant une pluralité de d'absorbeurs disposés côte à côte formant un pavage, un jeu suffisant étant prévu entre les absorbeurs adjacents de sorte à éviter un contact entre les absorbeurs en cas de dilatation, chaque absorbeur comportant en outre son propre circuit fluidique dans lequel est destiné à circuler un fluide destiné à être échauffé par le flux solaire, les circuits fluidiques des absorbeurs étant connectés entre eux.

14. Récepteur solaire selon la revendication 13, dans lequel le réseau fluidique de chaque absorbeur comporte une entrée d'alimentation et une sortie d'évacuation du fluide, lesdites entrées et sorties débouchant dans une face de l'absorbeur opposée à la face (6) destinée à être éclairée.

15. Centrale solaire à tour comportant une tour (22), au moins un récepteur (R1, R2, R3, R4) selon la revendication 12, 13 ou 14, monté sur ladite tour, le au moins un tube (10) du récepteur (2) étant connecté en entrée à une alimentation en fluide et en sortie à un système utilisant le fluide échauffé, au moins un héliostat (24) orienté vers le récepteur.

16. Centrale solaire selon la revendication 15, dans laquelle le fluide échauffé est un gaz, par exemple de l'air et le système utilisant le gaz échauffé est une turbine à gaz.

## Patentansprüche

1. Absorber für einen Solarempfänger (R1, R2, R3, R4) einer Solarturmanlage, umfassend eine Hülle (8), von dem wenigstens eine Wand (9) dazu ausgelegt ist, beschienen zu werden, einen Kern (12), der wenigstens teilweise von der Hülle (8) umgeben ist, sowie wenigstens ein Rohr (10), das den Kern (12) durchquert und sich im Wesentlichen in einer Richtung zu der Wand (9) erstreckt, die dazu ausgelegt ist, beschienen zu werden, wobei das Rohr (10) für die Zirkulation eines aufzuheizenden Fluides ausgelegt ist, **dadurch gekennzeichnet, dass** der Kern in wenigstens eine Material ist, die einen thermischen Leitfähigkeitskoeffizienten größer oder gleich 100 W.m⁻¹.K⁻¹ bei der Umgebungstemperatur aufweist.

2. Absorber nach Anspruch 1, umfassend eine Mehrzahl von Rohren (10), die sich im Wesentlichen in einer Richtung parallel zu der Wand (9) erstrecken, die dazu ausgelegt ist, beschienen zu werden.

3. Absorber nach Anspruch 2, bei dem die Rohre (10) in mehreren Schichten (c1, c2, c3) verteilt sind, wobei jede Schicht (c1, c2, c3) mehrere Rohre (10) umfasst, wobei die Schichten (c1, c2, c3) entlang einer Richtung überlagert sind, die im Wesentlichen senkrecht zu der Wand (9) ist, die dazu ausgelegt ist, beschienen zu werden.

4. Absorber nach einem der Ansprüche 1 bis 3, umfassend ein Zusatzteil (14, 14.1, 14.2) aus einem Material, das zur Wärmespeicherung geeignet ist, in Kontakt mit dem Kern (12), wobei das Zusatzteil (14, 14.1, 14.2) nicht von Rohren durchquert wird.

5. Absorber nach Anspruch 4, bei dem das Zusatzteil (14, 14.1, 14.2) bezogen auf den Kern entgegengesetzt zur Wand (9) angeordnet ist, die dazu ausgelegt ist, beschienen zu werden.

6. Absorber nach Anspruch 4 oder 5, bei dem das Zusatzteil (14) einstückig mit dem Kern (12) ist.

7. Absorber nach Anspruch 4, bei dem das Zusatzteil (14.1, 14.2) ein Behälter (18.1, 18.2) ist, der ein Phasenänderungsmaterial (20.1, 20.2) oder ein geschmolzenes Metall enthält.

8. Absorber nach Anspruch 7, bei dem der Behälter aus porösem Material (18.2) gebildet ist, welches mit einem Phasenänderungsmaterial (20.2) imprägniert ist.

9. Absorber nach einem der Ansprüche 1 bis 8, bei dem die Hülle (8) und das wenigstens eine Rohr (10) aus ein und demselben Material sind.

10. Absorber nach Anspruch 9, bei dem die Hülle (8) und das wenigstens eine Rohr (10) aus rostfreiem Stahl oder aus hitzebeständigem Material sind, und der Kern aus Kupfer, aus einer Wolframlegierung oder aus einer Nickellegierung ist.

11. Absorber nach einem der Ansprüche 1 bis 10, der durch Diffusionsschweißen hergestellt ist, vorzugsweise durch heißisostatisches Pressen.

12. Solarempfänger einer Solarturmanlage, umfassend wenigstens einen Absorber (4, 104, 104.1, 104.2) nach einem der Ansprüche 1 bis 11, einen Eingangskollektor (5), der das Fluid in dem Absorber verteilt, sowie einen Ausgangskollektor (7).

13. Solarempfänger nach Anspruch 12, umfassend eine Mehrzahl von Absorbern, die nebeneinander angeordnet sind und ein Pflaster bilden, wobei ein ausreichendes Spiel zwischen benachbarten Absorbern derart vorgesehen ist, dass ein Kontakt zwischen den Absorbern im Fall einer Ausdehnung vermieden wird, wobei jeder Absorber ferner seinen eigenen Fluidkreis umfasst, in dem ein Fluid zirkulieren kann, welches durch den Solarfluss aufgeheizt werden soll, wobei die Fluidkreise der Absorber miteinander verbunden sind.

14. Solarempfänger nach Anspruch 13, bei dem das Fluidnetz jedes Absorbers einen Versorgungseingang und einen Fluidauslassausgang umfasst, wobei der Eingang und der Ausgang an einer Seite des Absorbers münden, die entgegengesetzt ist zu der Seite (6), die dazu ausgelegt ist, beschienen zu werden.

15. Solarturmanlage, umfassend einen Turm (22), wenigstens einen Empfänger (R1, R2, R3, R4) nach Anspruch 12, 13 oder 14, der an dem Turm montiert ist, wobei das wenigstens eine Rohr (10) des Empfängers (2) am Eingang an eine Fluidversorgung angeschlossen ist und am Ausgang an ein System, das das aufgeheizte Fluid verwendet, wobei wenigstens ein Heliostat (24) zu dem Empfänger hin orientiert ist.

16. Solaranlage nach Anspruch 15, bei dem das aufgeheizte Fluid ein Gas ist, beispielsweise Luft, und das System, welches das aufgeheizte Gas verwendet, eine Gasturbine ist.

## Claims

1. Absorber for a solar power tower solar receiver (R1, R2, R3, R4) comprising an enclosure (8) wherein at least one panel (9) is intended to be illuminated, a core (12) at least partially encompassed by the enclosure (8) and at least one tube (10) passing through the core (12) and extending substantially in a parallel direction with respect to the panel (9) intended to be illuminated, said tube (10) being configured for the circulation of a fluid to be heated, **characterised in that** the core is in at least one material that has a heat conductivity coefficient greater than or equal to 100 W.m⁻¹.K⁻¹ at ambient temperature.

2. Absorber according to claim 1, comprising a plurality of tubes (10) extending substantially in a parallel direction with respect to the panel (9) intended to be illuminated.

3. Absorber according to claim 2, wherein the tubes (10) are distributed into a plurality of layers (c1, c2, c3), each layer (c1, c2, c3) comprising a plurality of tubes (10), the layers (c1, c2, c3) being stacked along a substantially normal direction with respect to the panel (9) intended to be illuminated.

4. Absorber according to any of claims 1 to 3, comprising an additional part (14, 14.1, 14.2) made of a material suitable for storing heat in contact with the core (12), said additional part (14, 14.1, 14.2) not being traversed by tubes.

5. Absorber according to claim 4, wherein the additional part (14, 14.1, 14.2) is arranged opposite the panel (9) intended to be illuminated with respect to the core.

6. Absorber according to claim 4 or 5, wherein the additional part (14) is integral with the core (12).

7. Absorber according to claim 4, wherein the additional part (14.1, 14.2) is a reservoir (18.1, 18.2) containing a phase-change material (20.1, 20.2) or a molten metal.

8. Absorber according to claim 7, wherein the reservoir consists of a porous material (18.2) impregnated with a phase-change material (20.2).

9. Absorber according to any of claims 1 to 8, wherein the enclosure (8) and the at least one tube (10) are made of the same material.

10. Absorber according to claim 9, wherein the enclosure (8) and the at least one tube (10) are made of stainless steel or a refractory material and the core is made of copper, tungsten alloy or nickel alloy.

11. Absorber according to any of claims 1 to 10, produced by diffusion welding, advantageously by hot isostatic pressing.

12. Solar power tower solar receiver comprising at least one absorber (4, 104, 104.1, 104.2) according to any of claims 1 to 11, an inlet collector (5) distributing the fluid in the absorber and an outlet collector (7).

13. Solar receiver according to claim 12, comprising a plurality of absorbers arranged side by side forming a paving, a sufficient gap being provided between the adjacent absorbers so as to prevent contact between absorbers in the event of expansion, each absorber further comprising its own fluid circuit in which a fluid intended to be heated by the solar flux is intended to circulate, the fluid circuits of the absorbers being interconnected.

14. Solar receiver according to claim 13, wherein the fluid network of each absorber comprises a fluid supply inlet and discharge outlet, said inlets and outlets opening into a face of the absorber opposite the face (6) intended to be illuminated.

15. Solar power tower comprising a tower (22), at least one receiver (R1, R2, R3, R4) according to claim 12, 13 or 14, mounted on said tower, the at least one tube (10) of the receiver (2) being connected at the inlet to a fluid supply and at the outlet to a system using the heated fluid, at least one heliostat (24) facing the receiver.

16. Solar power plant according to claim 15, wherein the heated fluid is a gas, for example air, and the system using the heated gas is a gas turbine.
